Europäisches Patentamt

European Patent Office

Office européen des brevets

(19)

(11) **EP 0 703 684 B1**

(12) **FASCICULE DE BREVET EUROPEEN**

(45) Date de publication et mention
de la délivrance du brevet:
**10.04.2002   Bulletin 2002/15**

(51) Int Cl.⁷: **H04J 3/06**

(21) Numéro de dépôt: **95402110.1**

(22) Date de dépôt: **19.09.1995**

(54) **Réseau de transmission point à multipoint à accès multiples par répartition temporelle**

Punkt- zu Mehrpunkt Übertragungssystem mit Zeitmultiplexvielfachzugriff

Point to multipoint transmission system with time division multiple access

(84) Etats contractants désignés:
**AT BE CH DE ES GB IT LI NL SE**

(30) Priorité: **23.09.1994   FR 9411401**

(43) Date de publication de la demande:
**27.03.1996   Bulletin 1996/13**

(73) Titulaire: **ALCATEL**
**75008 Paris (FR)**

(72) Inventeur: **Francois, Marcel**
**F-91400 Orsay (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 229 684          WO-A-88/05233**
**WO-A-92/22151          WO-A-93/19540**

## Description

L'invention concerne un réseau de transmission point à multipoints à accès multiples par répartit: ion temporelle comportant une station centrale et une pluralité de stations locales. Dans un tel réseau la station centrale émet des trames dites descendantes contenant des données destinées aux stations locales, chaque trame trame descendante ayant une durée fixée et comportant des données destinées à l'ensemble des stations locales, ou des données distinctes respectivement pour les différentes stations locales. Chaque station locale émet des sous-trames dites montantes, chaque sous-trame montante ayant une durée fixée et comportant des données émises par cette seule station locale et qui sont destinées à la station centrale. Les sous-trames sont émises par les stations locales de façon à se répartir dans le temps sans se chevaucher, pour constituer une trame dite montante.

Les stations locales étant à des distances diverses par rapport à la station centrale, la durée de propagation entre une station locale et la station centrale n'est pas uniforme pour toutes les stations. Des moyens de mesure de délais de transmission déterminent les instants d'émission de chaque station locale, de telle façon que les sous-trames émises par toutes les stations locales sont reçues par la station centrale sans se chevaucher. Pour permettre des mesures de délais de transmission, il est connu de cesser l'émission de données de la station centrale et l'émission de données des stations locales pendant des intervalles de temps périodiques.

Par exemple la demande de brevet européen n°0 188 117 décrit un réseau de transmission à accès multiple par répartition temporelle, dans lequel :

- une station centrale émet des trames d'une durée de 125 microsecondes comportant une pluralité de sous-trames puis une adresse destinée à l'une des stations locales et lui ordonnant d'émettre un message de test, puis un intervalle libre permettant une mesure de délais de propagation; chaque sous-trame contenant des données destinées à une station locale distincte;
- des stations locales émettent chacune à tour de rôle une sous-trame contenant des données à transmettre de cette station locale à la station centrale.

Chaque station locale comporte des moyens de mesure de délais de propagation qui déterminent le délai de propagation entre cette station locale et la station centrale, et en déduisent les instants où la station locale peut émettre une sous-trame, de façon que la station centrale reçoive une trame constituée de s sous-trames successives qui ne se chevauchent pas.

Ce document décrit un procédé de mesure de délais de propagation qui consiste à :

- émettre de la station centrale vers une station locale une adresse désignant cette station locale et lui ordonnant d'émettre un message de test, cette adresse étant insérée dans une trame descendante, à la suite des sous-trames de données, et précédant l'intervalle libre;
- émettre de cette station locale vers la station centrale un message de test dès que cette station locale a reconnu son adresse, l'intervalle libre dans les trames descendantes et l'intervalle libre dans les trames montantes ayant chacun une durée qui est choisie suffisante pour que le message de test tombe toujours dans ces intervalles quelle que soit la distance à laquelle est située une station locale, afin d'éviter une collision avec des données;
- recevoir le message de test dans la station centrale et le réémettre immédiatement, cette réémission ayant lieu dans l'intervalle libre d'une trame descendante;
- recevoir le message de test dans la station locale qui l'a émise, déterminer la durée de la propagation entre la station locale et la station centrale, et en déduire les instants d'émission des sous-trames de cette station locale.

Selon ce procédé, il est nécessaire de prévoir un intervalle libre dans les trames descendantes et un intervalle libre dans les trames montantes ayant chacun une durée au moins égale à la durée de propagation aller-retour, augmentée de la durée du message de test, pour éviter toute collision entre un message de test et des données transmises par la station centrale ou par les autres stations locales.

Dans l'exemple décrit par ce document, les stations locales sont reliées à une centrale téléphonique privée et sont réparties dans les limites d'un immeuble. Le délai de propagation aller-retour est donc de l'ordre de 10 microsecondes. Les trames ont une durée fixée à 125 microsecondes, qui correspond à la période d'échantillonnage d'un canal téléphonique classique dans un réseau téléphonique numérique. Il est possible de laisser libre un intervalle de l'ordre de 10 microsecondes, dans une trame de 125 microsecondes, sans diminuer de manière importante l'efficacité de transmission du réseau. Une telle durée de l'intervalle libre est toute à fait suffisante pour un réseau limité à un immeuble.

Par contre, ce procédé ne peut pas être mis en oeuvre dans un réseau étendu sur de plus grandes distances, tel qu'un réseau de télécommunication publique. En effet, un tel réseau est relié à des stations locales situées à des distances beaucoup plus importantes, pouvant atteindre 10 km. Le délai de propagation aller-retour atteint alors des valeurs de l'ordre de 100 microsecondes. Il n'est pas possible de sacrifier la majeure partie de la durée des trames pour laisser un intervalle libre ayant une durée de l'ordre de 100 microsecondes.

On connaît un procédé de mesure de délais de propagation qui s'accommode d'un intervalle libre de durée très inférieure à la durée de propagation aller-retour. Ce procédé tolère des collisions qui peuvent se produire entre les messages de test et les données. Par contre, ce procédé est plus complexe. Il comporte une étape d'estimation grossière de la durée de propagation, puis une étape d'estimation plus fine.

On connaît des procédés de test d'un support de transmission dans un tel réseau, mettant en oeuvre la réflectométrie, mais ces procédés sont habituellement utilisés en interrompant l'exploitation du réseau parce qu'il nécessitent un intervalle libre de durée pouvant atteindre le double du délai de propagation aller-retour.

Le document EP 0229 684 décrit un réseau de transmission point à multipoint à accès multiples par répartition temporelle, dans lequel des données sont transmises d'une station centrale vers des stations locales dans des multitrames comportant une pluralité de trames destinées respectivement aux stations locales. Chaque multitrame comporte un seul intervalle libre permettant des mesures de délais de transmission et des mesures de réflectométrie. Des données sont transmises des stations vers une station centrale sous la forme de multitrames comportant une pluralité de trames et un seul intervalle libre permettant des mesures de délais de transmission et des mesures de réflectométrie, chaque trame comportant des sous-trames émises respectivement par les stations locales, chaque station locale émettant une ou plusieurs des sous-trames contenues dans une trame. L'intervalle libre dans chaque multitrame peut être égal au double du délai maximal de propagation aller-retour, sans provoquer une réduction importante de l'efficacité de transmission du réseau, puisque cet intervalle libre est beaucoup moins fréquent que s'il existait dans chaque trame.

D'autre part, ce document décrit des moyens pour former des multi-trames en laissant un seul intervalle libre dans chaque multi-trame. Ces moyens opèrent une compression temporelle des données à transmettre.

Le but de l'invention est de proposer un réseau de transmission point à multi-point dans lequel la station centrale et les stations locales comportent des moyens pour émettre des multitrames comportant un seul intervalle libre, en opérant selon un procédé différent du procédé de compression temporelle.

L'objet de l'invention est un réseau de transmission point à multipoint à accès multiple par répartition temporelle, comportant une station centrale et une pluralité de stations locales;

chaque station locale comportant des moyens pour émettre des multitrames dites montantes comportant une pluralité de trames montantes et un seul intervalle libre ayant une largeur permettant d'effectuer des mesures, chaque trame montante comportant une pluralité de sous-trames dites montantes, chaque sous-trame montante ayant une durée fixée et comportant des données émises par cette seule station locale et destinée à la station centrale, les sous-trames montantes étant émises à des instants prédéterminés par des moyens de mesure de délais de transmission, de telle manière que les sous-trames émises par toutes les stations locales sont reçues par la station centrale en se répartissant dans le temps sans se chevaucher, et en constituant une trame dite montante;

la station centrale comportant des moyens pour émettre des multitrames dites descendantes comportant une pluralité de trames descendantes et un seul intervalle libre ayant une durée permettant d'effectuer des mesures;

caractérisé en ce que, dans la station centrale et/ ou au moins une station locale, les moyens pour émettre des multitrames comportent :

- des moyens pour prélever à une source de données une suite de paquets de données, deux paquets consécutifs étant séparés par un intervalle libre; et pour insérer chaque paquet dans une trame, deux trames consécutives étant séparées d'un intervalle libre;
- et des moyens de décalage temporel pour insérer un nombre prédéterminé de trames dans une multitrame, en décalant temporellement ces trames pour supprimer les intervalles libres existant entre ces trames, et constituer ainsi une multitrame comportant une seule suite continue de trames décalées et un seul intervalle libre.

L'invention sera mieux comprise et d'autres caractéristiques apparaîtront à l'aide de la description ci-dessous et des figures l'accompagnant :

- la figure 1 représente le schéma synoptique d'un exemple de réseau selon l'invention;
- la figure 2 représente schématiquement une multi-trame descendante et l'une des trames la composant;
- la figure 3 représente schématiquement une multi-trame montante, une des trames la composant, et une sous-trame composant l'une de ces trames;
- la figure 4 représente un chronogramme illustrant le fonctionnement de moyens pour émettre des multitrames, en sous-utilisant la capacité d'une source de données, et en conservant son débit binaire;
- la figure 5 représente le schéma synoptique d'un exemple de réalisation de ces moyens.

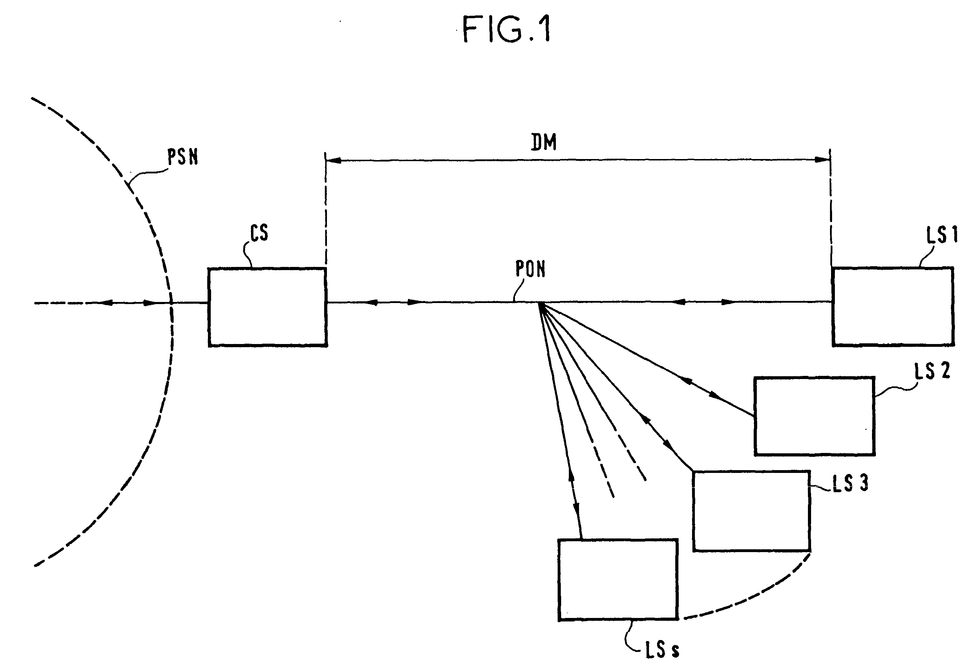

La figure 1 représente le schéma synoptique d'un exemple de réseau selon l'invention. Dans cet exemple, la station centrale émet des données destinées à toutes les stations. Dans d'autres exemples, la station centrale peut émettre des données distinctes pour les différentes stations locales, en attribuant chaque trame d'une multitrame à une station locale donnée.

La station centrale CS communique d'une part avec un réseau de télécommunications publique PSN et d'autre part avec s stations dites locales LS1, LS2, LS3, ..., LSs, via un réseau optique passif PON acheminant des signaux dans les deux sens. La station centrale CS transmet des données destinées à toutes les stations locales LS1, ..., LSs, et ces dernières transmettent chacune des données vers la station centrale CS. La station centrale CS échange des signaux avec le réseau de télécommunication publique PSN sous la forme de cellules à mode de transfert asynchrone au rythme moyen d'une cellule toutes les 125 microsecondes, ou un multiple de ce rythme, ce rythme correspondant à la période normalisée pour l'échantillonnage d'une voie téléphonique dans les réseaux téléphoniques numériques. De même, chaque station locale LS1, ..., LSs échange des données avec un terminal, non représenté, qui peut être un micro-ordinateur multimédia par exemple, au rythme moyen d'une cellule toutes les 125 microsecondes par exemple.

Les stations locales LS1, ..., LSs sont situées à des distances diverses par rapport à la station centrale CS. La station locale la plus éloignée, LS1 est située à une distance DM de l'ordre de 10 km, ce qui implique un délai de propagation aller-retour de l'ordre de 100 microsecondes. Pour permettre des mesures de délais de propagation, lorsqu'une station se connecte au réseau, et pour permettre des mesures de réflectométrie pour surveiller l'état des liaisons, sans qu'il y ait de collisions entre les signaux de mesure et les données, il est nécessaire d'interrompre l'émission des données dans les deux sens pendant des intervalles de temps ayant chacun une durée au moins égale à 100 microsecondes.

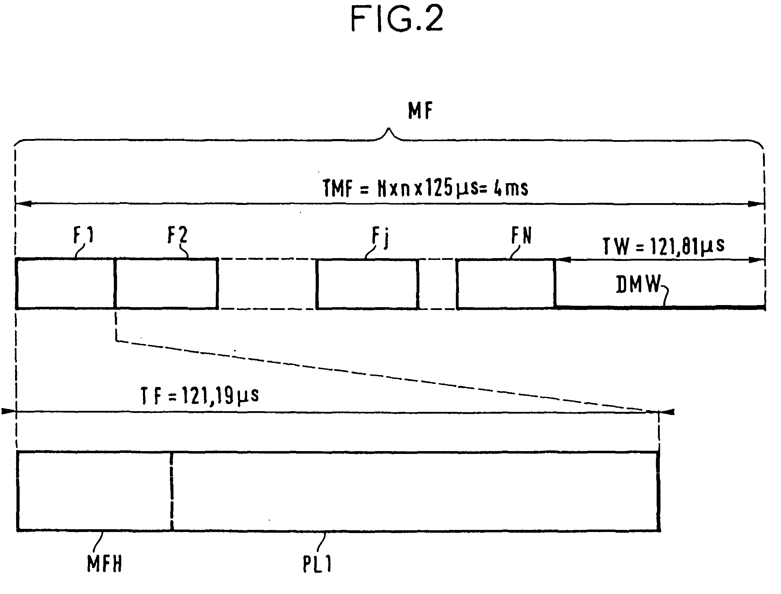

La figure 2 représente la structure d'une multitrame descendante MF émise par la station centrale CS, conformément à l'invention. Chaque multitrame MF a une durée TMF qui est égale à un multiple de la période d'échantillonnage d'une voie téléphonique, pour simplifier la réalisation du réseau. Dans cet exemple :

$$TMF = N \times n \times 125 \ \mu s = 4 \ ms,$$

où $n \times 125 \ \mu s$ est la durée de chaque trame F1, ..., FN constituant cette multitrame; n étant un entier et N étant le nombre de trames que contient une multitrame. Le nombre N peut être égal au nombre s de stations locales, mais ce n'est pas indispensable. Les trames F1, ..., FN sont suivies par un intervalle libre DMW ayant une durée fixée TW. Dans cet exemple, TW est égale à 121,81 $\mu s$ permettant de faire des mesures de délais de propagation et de réflectométrie pour une distance maximale DM de l'ordre de 10 km; n est égal à 1 et la durée fixée pour chaque trame est TF = 121,19 $\mu s$ qui est légèrement inférieure à la période d'échantillonnage d'un voie téléphonique.

Le contenu de chacune des trames dépend de l'application considérée. Si la station centrale émet des données différentes pour les différentes stations locales, chaque trame, telle que la trame Fj, est subdivisée en sous-trames, non représentéees, destinées à différentes stations locales LS1, ..., LSs. Si la station centrale CS émet des données communes pour toutes les stations locales, ces données peuvent être réparties de manière quelconque dans les trames F1, ..., FN. Dans ce dernier cas, la trame F1 comporte une en-tête de multitrame, MFH, et une charge payante PL1, alors que toutes les autres trames F2, ..., FN ne comportent qu'une charge payante. L'en-tête MFH permet de gérer les données transmises dans la charge payante de toutes trames F1, ..., FN composant la multitrame MF. Dans un exemple de mise en oeuvre, dans lequel le rythme binaire des multitrames descendantes est de 155,52 Mbits/s, chaque trame comporte 2356 octets, la première trame F1 comportant une en-tête MFH de 16 octets et une charge utile PL1 de 2340 octets.

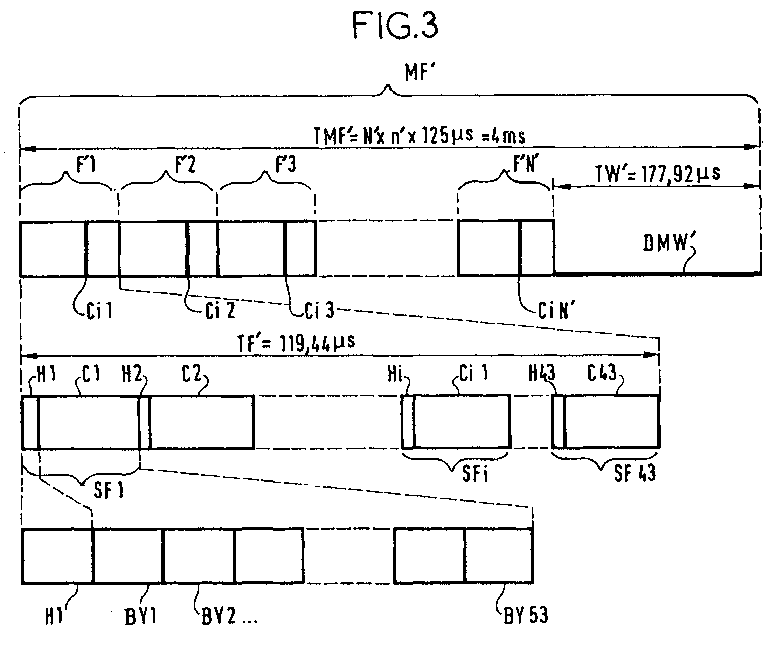

La figure 3 représente la structure d'une multitrame montante MF'. Dans cet exemple, celle-ci a une durée fixée :

$$TMF' = N' \times n' \times 125 \ \mu s = 4 \ ms,$$

où N' est le nombre des trames F'1, ..., F'N' que comporte la multitrame MF', et où $n' \times 125 \ \mu s$ est la durée de chacune de ces trames, n' étant un entier. Ces trames sont suivies d'un intervalle libre DMW' ayant une durée TW'= 177,92 $\mu s$ permettant des mesures de délais de transmission et des mesures de réflectométrie. La durée de cet intervalle libre étant largement supérieure à 100 microsecondes, elle permet des mesures de délais de transmission pour une distance maximale DM supérieure à 10 km.

Chaque trame a une durée fixée TF'= 119,44 $\mu s$ et est constituée, dans cet exemple, de 43 sous-trames SF1, ..., SFi, ..., SF43. Chaque station locale LS1, ...., LSs émet une ou plusieurs sous-trames selon la quantité d'informations qu'elle doit transmettre, l'attribution de ces sous-trames étant fixée pendant toute la durée d'une communication. L'instant où une station émet sa sous-trame ou ses sous-trames est déterminé par des moyens de mesure de délais de propagation, de telle façon qu'en arrivant à la station centrale CS, les sous-trames SF1, ..., SF43 se répartissent dans le temps sans se chevaucher et en constituant un paquet continu de données.

Dans cet exemple chaque sous-trame, par exemple la sous-trame SFi, est constituée d'un préambule de longueur fixée égale à un octet, incluant un intervalle de garde, et d'une charge utile Ci1 constituée de 53 octets qui peuvent être des échantillons de plusieurs voies téléphonique classiques ou bien les 53 octets BY1, ..., BY53 d'une cellule à mode de transfert asynchrone. Par exemple, si une station locale LSi reçoit d'une source de données une suite de cellules Ci1,...,CiN',..., successives, au rythme moyen d'une cellule toutes les 125 μs, ces cellules sont transportées respectivement dans les trames F'1,..., F'N' de la multitrame MF'.

Ce réseau de transmission procure une bonne efficacité de transmission, malgré l'existence d'intervalles libres permettant des mesures de délais de transmission dont les durées sont de l'ordre de 100 μs, parce que ces intervalles libres sont répétés avec une période qui est un multiple de la durée d'une trame, ce qui permet de réduire l'importance relative des intervalles libres par rapport aux données transmises. Par exemple, si chaque multitrame est constituée de 32 trames ayant chacune une durée de 125 microsecondes, et si la durée de l'intervalle libre est de 100 microsecondes, les intervalles libres n'occupent que 2,4 % de la durée totale.

Il est à remarquer que ces intervalles libres ont une durée qui permet de les utiliser aussi pour tester l'état du support de transmission du réseau, par réflectométrie.

Le procédé utilisé pour former les multitrames descendantes MF et pour former les multitrames montantes MF' consiste à sous-utiliser la capacité de chaque source de données, c'est-à-dire ne lui demander de fournir qu'un nombre de paquets de données inférieur à ce qu'elle pourrait fournir pendant la durée d'une multitrame.

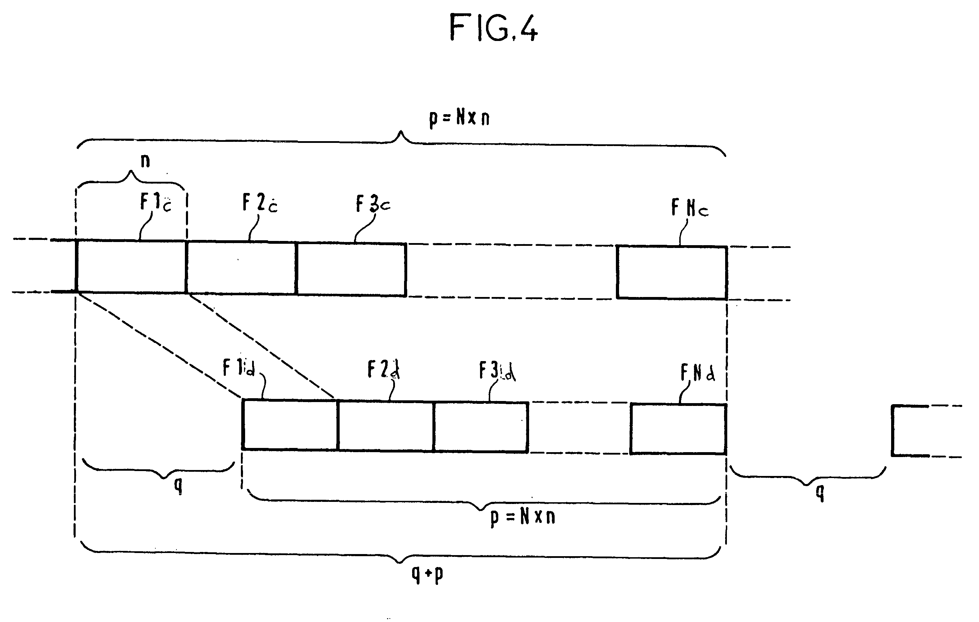

La figure 4 représente un chronogramme illustrant le procédé consistant à sous-utiliser la capacité d'une source de données. Cette source de données a une capacité permettant de fournir une suite continue d'octets avec un rythme binaire fixé H. En fait, elle est utilisée pour fournir des trames F1c, F2c, F3c, ..., FNc comportant n-m octets, deux trames successives étant séparées par un intervalle libre correspondant à m octets. Une multitrame est constituée en concaténant N trames F1c, ..., FNc pour constituer une suite continue de trames F1d, ..., FNd ayant le même rythme binaire H mais qui sont décalées dans le temps par rapport aux trames F1c, ..., FNc, de façon à rassembler dans un seul intervalle libre les N intervalles libres correspondant chacun à m octets.

L'intervalle libre choisi pour la multitrame correspond à q octets, avec q = N x m, par conséquent le choix de la largeur de l'intervalle libre dans la multitrame détermine le nombre m d'octets correspondant à l'intervalle libre entre deux trames successives fournies par la source. La sous-utilisation de la source peut être exprimée par le rapport $\frac{m}{n}$.

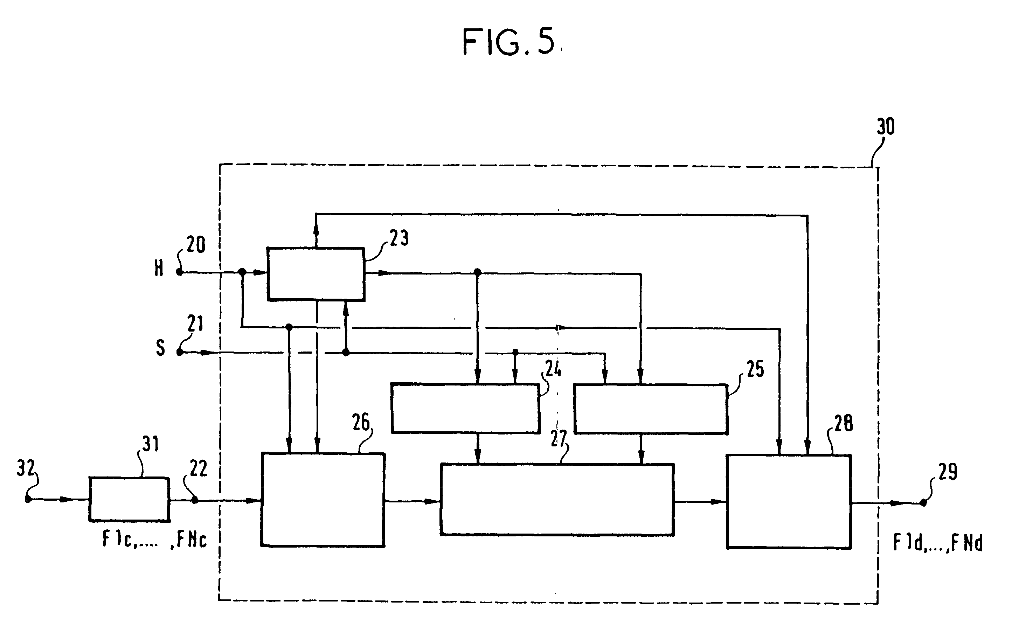

La figure 5 représente le schéma synoptique d'un exemple de réalisation de moyens pour émettre des multitrames en sous-utilisant la capacité d'une source de données et en conservant le même rythme binaire. Ce dispositif peut être utilisé soit pour émettre des multitrames d'une station centrale vers les stations locales, ou bien d'une station locale vers une station centrale.

Cet exemple de réalisation comporte : un dispositif 31 qui est un dispositif classique de formation de trames, ayant une borne d'entrée 16 reliée à une source de données, et une sortie fournissant des trames F1c, ..., FNc, comportant chacune n-m octets, avec un rythme binaire H, deux trames successives étant séparées par un intervalle libre correspondant à m octets; et un dispositif 30 de décalage temporel, pour former des multitrames.

Ce dispositif 30 comporte :

- une borne d'entrée 20 recevant un signal d'horloge H au rythme binaire des données des trames F1c, ..., FNc;
- une borne d'entrée 21 revevant un signal de synchronisation S au rythme des multitrames;
- une borne d'entrée 22 recevant les trames de données F1c, ..., FNc, sous forme série;
- une borne de sortie 29 fournissant une multitrame constituées de trames F1d, ..., FNd et d'un intervalle libre correspondant à 9 octets;
- un diviseur de fréquence par huit 23, ayant une entrée d'horloge reliée à la borne d'entrée 20, une entrée de synchronisation reliée à la borne d'entrée 21, et trois sorties;
- un dispositif 26 de conversion série-parallèle ayant une entrée de données reliée à la borne d'entrée 22, une première entrée d'horloge reliée à la borne d'entrée 20, une seconde entrée d'horloge reliée à une première sortie du diviseur 23 fournissant un signal d'horloge au rythme H/8 des octets des trames F1c, ..., FNc, et une sortie;
- une mémoire vive 27 à double accès, ayant une entrée de données reliée à la sortie du dispositif 26, une entrée de commande d'écriture, une entrée de commande de lecture, et une sortie;
- un dispositif 28 de conversion parallèle-série, ayant une entrée de données reliée à la sortie de la mémoire 27, une première entrée d'horloge reliée à la borne d'entrée 20, une seconde entrée d'horloge reliée à une seconde sortie du diviseur 23 fournissant un signal d'horloge au rythme H/8 qui est le rythme des octets des trames F1d, ..., FNd, et une sortie reliée à la borne de sortie 29;
- une base de temps d'écriture, 24, ayant une entrée d'horloge reliée à une troisième sortie du diviseur 23 et fournissant un signal d'horloge au rythme H/8 des octets des trames F1c, ..., FNc, une entrée de synchronisation reliée à la borne d'entrée 21, et une sortie reliée à l'entrée de commande d'écriture de la mémoire 27;
- une base de temps de lecture, 25, ayant une entrée d'horloge reliée à la seconde sortie du diviseur 23 fournissant un signal d'horloge au rythme H/8, une entrée de synchronisation reliée à la borne d'entrée 21, et une sortie reliée à l'entrée de commande de lecture de la mémoire 27.

La mémoire 27 a une capacité correspondant à au moins q octets, ceux-ci étant stockés octet par octet. Le dispositif de conversion 26 permet de stocker sous la forme d'octets les bits de données des trames F1c, ..., FNc. Le dispositif de conversion 28 permet de restituer sous la forme série les données lues octet par octet dans la mémoire 27. Pour chaque trame F1c,..., FNc, la base de temps 24 commande l'écriture de n-m octets, au rythme $\frac{H}{8}$ puis ne commande aucune écriture pendant un intervalle de temps correspondant à m octets. Pour chaque multitrame, la base de temps 25 ne commande aucune lecture pendant un intervalle de temps correspondant à q octets, puis elle commande p-q lectures d'un octet, au rythme $\frac{H}{8}$. Les trames F1d, ..., FNd sont ainsi décalées respectivement par rapport aux trames F1c, ..., FNc avec des décalages tels que les intervalles libres m existant entre ces trames sont supprimés; et tels que les trames F1d, ..., FNd forment une suite continue de bits et sont précédées d'un intervalle libre unique.

Des moyens connus de mesure de délais de propagation et des moyens classiques de réflectométrie peuvent être utilisés dans un réseau selon l'invention.

L'invention est applicable à tout réseau point à multipoint, à accès multiple par répartition temporelle, et en particulier à ceux dont les sources de données sont synchrones ou plésiochrones.

## Revendications

1. Réseau de transmission point à multipoint à accès multiple par répartition temporelle, comportant une station centrale (CS) et une pluralité de stations locales (LS1, ..., LS$_s$);

   chaque station locale (LS1, ..., LS$_s$) comportant des moyens (14;30) pour émettre des multitrames (MF') dites montantes comportant une pluralité de trames montantes (F'1, ..., F'N) et un seul intervalle libre (DMW') ayant une largeur permettant d'effectuer des mesures, chaque trame montante (F1') comportant une pluralité de sous-trames (SFi) dites montantes, chaque sous-trame montante ayant une durée fixée et comportant des données émises par cette seule station locale et destinée à la station centrale, les sous-trames montantes étant émises à des instants prédéterminés par des moyens de mesure de délais de transmission, de telle manière que les sous-trames émises par toutes les stations locales sont reçues par la station centrale en se répartissant dans le temps sans se chevaucher, et en constituant une trame dite montante (TMF');

   la station centrale comportant des moyens (14; 30) pour émettre des multitrames dites descendantes (MF) comportant une pluralité de trames descendantes (F1, ..., FN) et un seul intervalle libre (DMW) ayant une durée permettant d'effectuer des mesures;

   **caractérisé en ce que**, dans la station centrale (CS) et/ou au moins une station locale (LS1,..., LSs), les moyens pour émettre des multitrames comportent :

   - des moyens (31) pour prélever à une source de données une suite de paquets de données, deux paquets consécutifs étant séparés par un intervalle libre; et pour insérer chaque paquet dans une trame (F1c,...,FNc), deux trames consécutives étant séparées d'un intervalle libre (m) ;
   - et des moyens (30) de décalage temporel pour insérer un nombre prédéterminé de trames dans une multitrame, en décalant temporellement ces trames pour supprimer les intervalles libres (m) existant entre ces trames, et constituer ainsi une multitrame comportant une seule suite continue de trames décalées (F1d,..., FNd) et un seul intervalle libre (q).

## Claims

1. Time division multiple access point-to-multipoint transmission network including a central station (CS) and a plurality of local stations (LS1, ..., LS$_s$); each local station (LS1, ..., LS$_s$) including means (14; 30) for sending return multiframes (MF') including a plurality of return frames (F'1, ..., F'N') and a single free period (DMW') having a duration allowing measurements to be made, each return frame (F1') including a plurality of return subframes (SFi) each having a fixed duration and containing data sent by that local station only and addressed to the central station, return subframes being sent at predetermined times decided on by transmit time measurement means so that subframes sent by all the local stations are received by the central station without overlapping and constitute a return frame (TMF');

   the central station including means (14; 30) for sending forward multiframes (MF) including a plurality of forward frames (F1, ..., FN) and a single free period (DMW) having a duration allowing measurements to be made;

   **characterized in that**, in the central station (CS) and/or at least one local station (LS1, ..., LS$_S$), the means for sending multiframes include:

   - means (31) for sampling from a data source a series of data packets, two consecutive packets being separated by a free period, and for inserting each packet into a frame (F1c, ..., FNc), two consecutive frames being separated by a free period (m); and
   - time-shift means (30) for inserting a predetermined number of frames into a multiframe, time-shifting said frames to eliminate the free periods (m) between them and thus to constitute a multiframe including a single continuous stream of time-shifted frames (F1d, ..., FNd) and a single free period (q).

von verschobenen Rahmen (F1d, FNd) und einem einzigen freien Intervall (q).

**Patentansprüche**

1. Punkt-zu-Mehrpunkt-Übertragungsnetz mit Mehrfachzugriff im Zeitmultiplex, umfassend eine zentrale Station (CS) und eine Mehrzahl von lokalen Stationen (LS1, ..., LS$_s$);
wobei jede lokale Station (LS1, ..., LS$_s$) Mittel (14; 30) zum Senden von so genannten Aufwärts-Multirahmen (MF') umfasst, die eine Mehrzahl von Aufwärts-Rahmen (F'1, ..., F'N') und ein einziges freies Intervall (DMW') mit einer Breite umfassen, die die Durchführung von Messungen erlaubt, wobei jeder Aufwärts-Rahmen (F1') eine Mehrzahl von so genannten Aufwärts-Unterrahmen (SFi) aufweist, wobei jeder Aufwärts-Unterrahmen eine festgelegte Dauer hat und von dieser einzigen lokalen Station gesendete und für die zentrale Station (CS) bestimmte Daten umfasst, wobei die Aufwärts-Unterrahmen zu Zeitpunkten gesendet werden, die durch Mittel zum Messen von Übertragungsverzögerungen derart vorgegeben sind, dass die von allen lokalen Stationen gesendeten Unterrahmen von der zentralen Station zeitlich verteilt und ohne sich zu überlappen empfangen werden und dabei einen so genannten Aufwärts-Rahmen (TMF') bilden;
wobei die zentrale Station Mittel (14; 30) zum Senden so genannter Abwärts-Multirahmen (MF) umfasst, die eine Mehrzahl von Abwärts-Rahmen (F1, ..., FN) und ein einziges freies Intervall (DMW) mit einer Breite aufweisen, die die Durchführung von Messungen erlaubt;
**dadurch gekennzeichnet, dass** in der zentralen Station (CS) und/oder in wenigstens einer lokalen Station (LS1, .., LS$_s$) die Mittel zum Senden der Multirahmen umfassen:

Mittel (31) zum Abgreifen einer Folge von Datenpaketen von einer Quelle, wobei zwei aufeinander folgende Pakete durch ein freies Intervall getrennt sind; und zum Einfügen jedes Pakets in einen Rahmen (F1c, .., FNc), wobei zwei aufeinander folgende Rahmen durch ein freies Intervall (m) getrennt sind;
und Zeitverschiebungsmittel (30) zum Einfügen einer vorgegebenen Anzahl von Rahmen in einen Multirahmen durch zeitliches Verschieben dieser Rahmen zum Beseitigen der zwischen diesen Rahmen bestehenden freien Intervalle (m) und zum so Bilden eines Multirahmens mit einer einzigen kontinuierlichen Folge

# FIG.1

EP 0 703 684 B1

# FIG.2

MF

$TMF = N \times n \times 125\,\mu s = 4\,ms$

F1  F2  Fj  FN

$TW = 121,81\,\mu s$

DMW

$TF = 121,19\,\mu s$

MFH  PL1

EP 0 703 684 B1

# FIG.3

MF'

TMF'= N'x n' x 125μs =4ms

F'1  F'2  F'3  F'N'

TW'= 177,92μs

DMW'

Ci 1   Ci 2   Ci 3   Ci N'

TF'= 119,44μs

H1  C1  H2  C2   Hi  Ci 1  H43  C43

SFi   SF 43

SF 1

H1   BY1   BY2 ...   BY 53

EP 0 703 684 B1

FIG.4

$p = N \times n$

F1c  F2c  F3c  FNc

n

$p = N \times n$

F1d  F2d  F3d  FNd

q

q + p

q

FIG. 5.